# EUROPEAN PATENT APPLICATION

(11) **EP 1 170 614 A1**
(43) Date of publication of application: **09.01.2002**
(21) Application number: 00311310.7
(22) Date of filing: 18.12.2000
(51) Int. Cl.: G02B 6/44

(54) **Dry-blocked armored cable having reduced water penetration**

(30) Priority: 07.06.2000 US 588784
(71) Applicant: LUCENT TECHNOLOGIES INC., Murray Hill, New Jersey 07974-0636 (US)
(72) Inventor: Horwitz, Kenneth Alan, Lithia Springs, Georgia 30122 (US)
(74) Representative: Buckley, Christopher Simon Thirsk

(57) **Abstract**

A dry-blocked armored cable [40] having reduced water penetration includes a core [55] that extends along a longitudinal axis of the cable and includes groups of optical fibers [25]. The core is surrounded by an armor tape [300] having an inside surface that is coated with a layer of liquid polymeric material [315] that has been cured (polymerized) prior to being wrapped around the core. The polymeric material is swellable upon contact with water and operates to block the entry of water into the core. The armor tape extends along the length of the cable and includes a seam [301] where a portion of the inside surface overlaps the outside surface of the tape. A plastic jacket [41] surrounds the outside surface of the armor tape to protect the cable during handling and exposure to the environment.

## Description

### Technical Field

This invention relates to an armored communications cable having water-blocking provisions and, more particularly, to the use of water-absorbing polymers within such a cable.

### Background of the Invention

In the cable industry, it is well known that changes in ambient conditions lead to differences in vapor pressure between the inside and the outside of a plastic cable jacket. This generally operates to diffuse moisture in a unidirectional manner from the outside of the cable to the inside. Eventually, this will lead to an undesirably high moisture level inside the cable, especially if a plastic jacket is the only barrier to the ingress of the moisture. High levels of condensed moisture inside a cable sheath system may have a detrimental effect on the transmission characteristics of a metallic conductor. Lately, optical fiber cables have made great inroads into the communications cable market. And while the presence of water itself within an optical fiber cable is not necessarily detrimental to its performance, passage of the water along the cable interior to connection points, for example, may cause problems especially in freezing environments and should be prevented.

Cables for transmitting communications signals must meet industry standards with respect to water blocking provisions. For example, one industry standard requires that there be no transmission of water under a pressure head of one meter in one hour through a one meter length of cable.

Furthermore, water may enter the cable because of damage to the cable which compromises its integrity. For example, rodent attacks or mechanical impacts may cause openings in the sheath system of the cable to occur, allowing water to enter and, if not controlled, to move longitudinally along the cable into splice closures. It has been found that an effective way to protect directly exposed cables from rodent attacks is to surround the cable core with in a metallic shield *(i.e.,* armor). Nevertheless, armor alone is insufficient to protect the cable from water incursion because the seams may be poorly formed and lightning strikes may create holes in the armor.

There are essentially three known techniques to avoid water penetration failure in armored cable construction:
The first technique is to apply a water blocking material between the cable core and the armor. Such a technique is disclosed, for example, in U.S. Patent 4,909,592 wherein a water blocking tape and/or water blocking yarns are installed. However, such tapes are relatively expensive and add to the inventory of materials needed during construction. Similarly, UK Patent Application GB 2 164 198 A discloses a grease-filled cable in which a water blocking powder is dusted onto various internal components of the cable including the stranded wires and/or a helically applied metallic strip. As discussed below, the presence of grease in cables is undesirable for both customers and manufacturers. Moreover, many customers consider loose water blocking powders to be a health hazard.
Another technique is the use of a corrugated armor tape in which the registers of the corrugations are carefully aligned so that the peaks and valleys make intimate contact. And while this technique is effective, it is both difficult and expensive to achieve. Indeed, in order to align the registers of the corrugated tape, expensive roll forming equipment is generally employed.
The third technique for preventing water penetration is to apply a material such as "hot melt" into the overlap (seam) region of the armor tape. This requires applying the material either immediately before or during the tape forming process. If material applied to the seam is insufficient, the cable will fail the water penetration test. And if superfluous material is applied, then additional material accumulates on the forming dies downstream from the applicator and causes jacket defects. Indeed, the major cause of jacket defects relates to the presence of such superfluous material. Additionally, the position of the applicator is also critical. If the applicator output is sufficient, but is placed too deep into the overlay of the tape, the gap in the overlap may not be completely filled with material and the cable will fail the water penetration test. And if the applicator is placed too shallow into the overlay, the cable will fail the water penetration test. This condition may also cause jacket defects because superfluous material accumulates on the forming dies.
Although the foregoing arrangements provide excellent water blocking capabilities, they generally have been used to supplement grease-like filling materials such as disclosed in U.S. Patent 4,701,016 that fill the core. These materials are somewhat messy to apply and require a cleaning agent such as a solvent to remove the filling compound to facilitate splicing. Also, care must be taken so that these agents do not affect adversely coloring material or coating material on the fiber. What is sought after is a cable in which the core is not filled with a grease-like material but rather includes other provisions blocking water flow along the core.

### Summary of the Invention

The foregoing problems of the prior art have been overcome by dry cables of the present invention, which include a core that extends along a longitudinal axis of the cable having a number of transmission media. The core is surrounded by an armor tape whose inside surface is coated with a layer of liquid polymeric material that has been cured (polymerized) prior to being wrapped around the core. The polymeric material is swellable upon contact with water and operates to block the entry of water into the core. The armor tape extends along the length of the cable and includes a seam where a portion of the inside surface overlaps the outside surface of the tape. A plastic jacket surrounds the outside surface of the armor tape to protect the cable during handling and exposure to the environment.

In illustrative embodiments of the invention, the transmission media comprise optical fibers that are bundled into groups and contained with one or more core tubes. Also in illustrative embodiments of the invention, the armor tape is made from corrugated steel, and the cable includes one or more strength members that extend along its length and provide tensile strength.

In one illustrative embodiment, a layer of liquid superabsorbent polymer (SAP) is both applied to the armor tape and cured as the cable is being fabricated.

### Brief Description of the Drawing

The invention and its mode of operation will be more clearly understood from the following detailed description when read with the appended drawing in which:
FIG. 1 illustrates testing of a communications cable for water penetration;
FIG. 2 discloses a prior art dry cable having water-blocking provisions;
FIG. 3 shows part of a manufacturing line where cables are fabricated in accordance with the invention, particularly illustrating the application and curing of liquid polymeric materials on the armor tape;
FIG. 4 is a cross-section view of the cable shown in FIG. 5;
FIG. 5 is a perspective view of one embodiment of an optical cable in accordance with the present invention;
FIG. 6 is a cross-section view of the cable shown in FIG. 7; and
FIG. 7 is a perspective view of another embodiment of an optical cable in accordance with the present invention.

### Terminology

The following definitions are in accord with common usage in the art:
***Dry Cable -*** a communications cable that avoids the use of grease-like filling materials within its core.
***Core -*** the portion of a communications cable that includes transmission media, such as optical fibers and/or copper wires, which are surrounded by a sheath system.
***Sheath System -*** the portion of a communications cable that surrounds the core and which is used to protect the transmission media during handling and from environmental conditions.
***Superabsorbent Polymer (SAP) -*** a crosslinked polymer that is capable of absorbing large quantities of water or aqueous solution while retaining the liquid under pressure. These materials are insoluble in aqueous solutions and typical organic solvents.

### Detailed Description

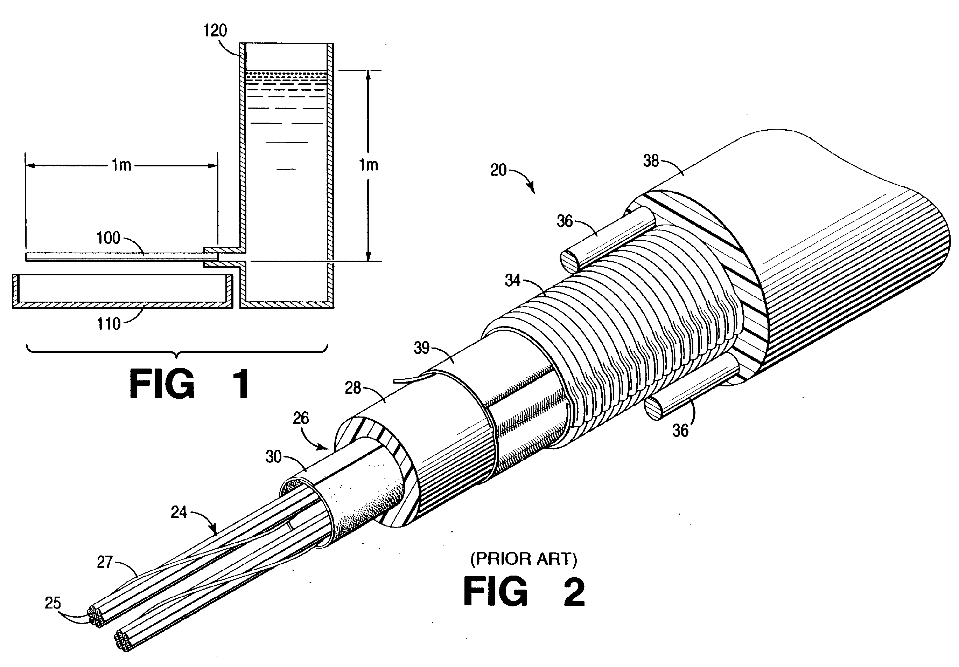

At least one industry standard requires that there be no transmission of water under a pressure head of one meter in one hour through a one meter length of cable. Testing for compliance with such a standard is generally illustrated in FIG. 1 where a column of water 120, whose height is one meter above cable 100, is coupled to one end of the cable 100. In order to meet the standard, no water should emerge from the other end of cable 100 in less than an hour. Nevertheless, a drip pan 110 is positioned to catch any emerging water. Outdoor cables generally include water-blocking materials to prevent the flow of water along their length. Examples of such materials include hydrophobic gel-like (grease) fillers that fill the interstices of the cable in an effort to block the flow of water. And while grease fillers are effective for their intended purpose, they are intensely disliked by craft personnel who must deal with the grease when splicing such cables. Another example of a water-blocking material is a hydrophilic polymer which, when installed in a cable, absorbs water and swells to block the longitudinal flow of water along the length of the cable. Such a cable is shown in FIG. 2.

FIG. 2 discloses a known communications cable 20 that includes a core 26 comprising one or more units 24-24 of optical fibers 25. Each of the units 24-24 is wrapped with a color-coded binder yarn 27. These units are contained within a plastic core tube 28 that is disposed along the central axis of the cable. The core further comprises a first water-blocking tape 30 within the core tube 28. The water-blocking tape 30 is a spunbonded, non-woven polyester material that includes a web structure of randomly arranged fibers that have been treated with hydrophilic materials, so-named because they absorb water readily. A second water-blocking tape 39 is wrapped around the outer surface of the core tube 28 and has the same general construction as tape 30. The core tube 28 is additionally enclosed by a metallic shield 34 and an outer plastic jacket 38. A pair of diametrically opposed strength rods 36-36 protect the optical fibers 25 by adding tensile strength and compressive stiffness to the cable. Because this particular cable 20 avoids the use of grease-like filling materials, it is known as a "dry cable."

Hydrophilic materials include superabsorbent polymers, which can absorb and retain large quantities of water or aqueous solution under pressure without dissolution in the fluid being absorbed. Synthetic polymers comprise the majority of the market and are represented by synthetic components. Examples include: cross-linked polyacrylate, polyacrylamide, and various co- and ter-polymers. Polyacrylate-based materials represent the single largest class of materials. As the polymer is solvated, chains unfold and ionic repulsive forces expand its molecules - creating the large absorption capacities this class of polymer. Typical capacity will range from 200 to 1000 times on a weight-to-weight basis. Capacity decreases as ionic strength of the solution increases. For example, the capacity of a 1% saline solution is about 10% that for distilled water. Speed of absorption is a function of surface area, and degree and type of crosslinking. It can range from a few seconds to several hours. The cross-linking density affects not only the absorbency, but also the time required to absorb and the strength of the gel formed. Generally, the higher the cross-linking density, the stronger the gel which is formed. The time to reach absorbent capacity decreased as the cross-linking density increases, and the absorbent capacity decreases.

Absorbed fluid will slowly evaporate from a swollen polymer until it reaches a relatively dry state depending on the humidity present. This dry material will again absorb water to the original level. This cycling phenomena will continue over the life of the polymer.

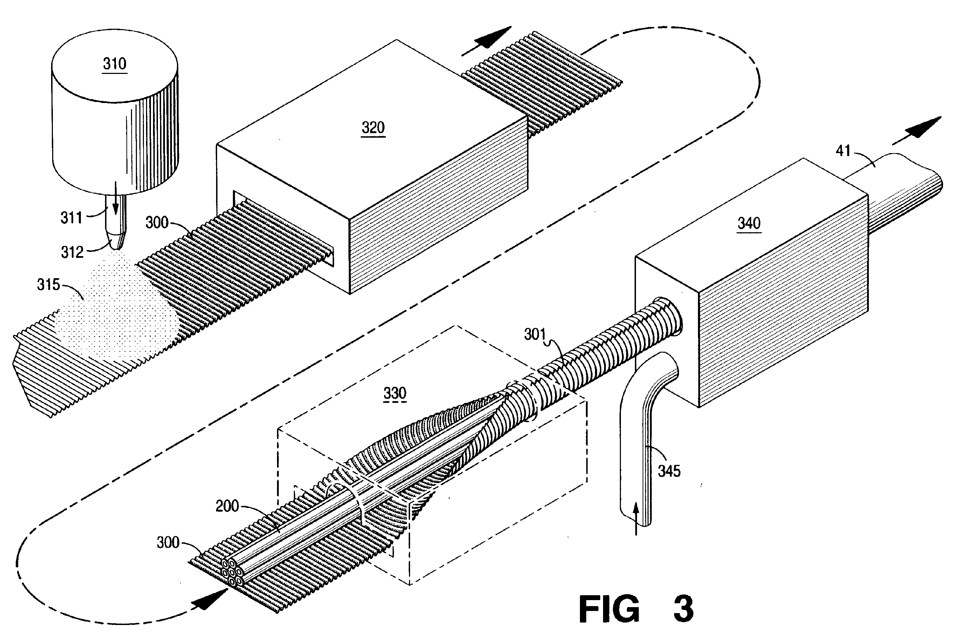

In accordance with the present invention, FIG. 3 generally illustrates the construction of a dry-blocked armored cable that not only avoids grease-like fillers but also avoids the expense of water-blocking tapes and loose powders. The inventor has determined that a superabsorbent polymer (SAP) 315, in its liquid state, can be applied to one side of an armor tape 300 and cured prior to the tape 300 being formed around a plurality of transmission media 200. In the preferred embodiment of the present invention, the tape 300 comprises corrugated steel that is coated with a liquid SAP and cured as the cable is being manufactured. Liquid SAP 315 is stored in a container 310, which heats and pumps the liquid 315 through tube 311 and nozzle 312 onto a moving armor tape 300. In another embodiment of the present invention, the tape is coated with a liquid SAP and cured before being loaded onto the manufacturing line. In either event, curing (polymerization) may take place in the air at room temperature or via curing station 320, which may include thermal heaters or ultraviolet lamps to hasten polymerization. A liquid SAP material that is suitable for use in the present invention is Meltsorb™ 104 Hot-Melt Superabsorbent, which is commercially available from Emerging Technologies Inc., and is sprayed at temperatures between 150°C and 190°C. Another liquid SAP material that is suitable for use in the present invention is MACROMELT Q 4411-22 hot-melt sealant, which is commercially available from Henkel Adhesives, and is sprayed at temperatures between 120°C and 160°C. Both of these liquid SAP materials are cured in air at room temperature without the use of curing station 320.

Also shown in FIG. 3 is a forming die 330 which forms the tape 300 around a plurality of transmission media 200, which may comprise optical fibers or copper wires. The die 330 and the armor tape 300 are sized to provide a small amount of overlap, thereby providing a seam 301 that is preferably parallel to the longitudinal axis of the cable. Alternatively, the armor tape may be wrapped around the transmission media with a seam that helically advances along the length of the cable.

Once the armor tape 300 has been formed around the transmission media 200, it passes through an extruding head 340, which also receives a plastic material at high temperature and pressure from tube 345 and extrudes the plastic material onto the outer surface of the armor tape 300. Preferably, the plastic material comprises polyethylene, which forms an outer jacket 41 that protects the finished cable during handling and from adverse environmental conditions.

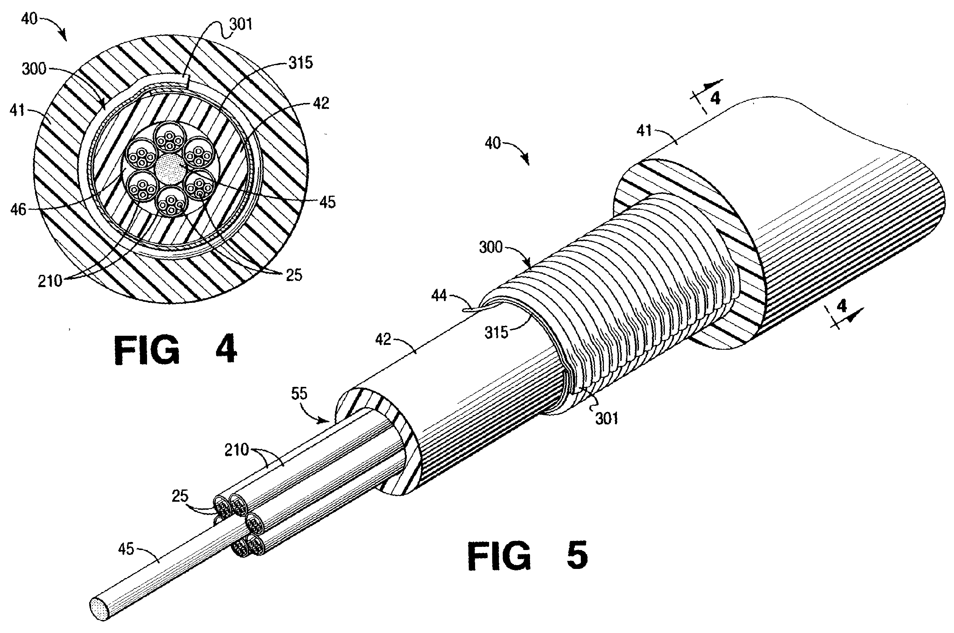

One embodiment of the present invention is shown in FIG. 4 and 5, which illustrates a dry-blocked armor cable 40 having one or more strength members within the core 55. In particular, the core 55 includes a cylindrical plastic tube 42 that contains several smaller tubes 210 that individually contain a bundle of color-coded optical fibers 25. The smaller plastic tubes 210 are, themselves, color coded for easy identification. It is noted that the bundles of optical fibers may be organized as a unit via a number of different structures including binder yarns such as disclosed in U. S. Patent 4,909,592; or small plastic tubes such as disclosed in U. S. Patent 4,909,593;
or thin sheaths such as disclosed in U. S. Patent 5,155,789. A central strength member 45, illustratively made from aramid and/or glass fibers embedded in epoxy, provides tensile strength and compressive stiffness to the cable 40. The region 46 between tubes 210 and the strength member 45 is dry, which is to say the it contains no grease-like filling materials. Corrugated steel armor 300 surrounds the core tube 42. In accordance with the invention. the inside surface of the armor 300 is coated with a liquid SAP that has been cured; and the coating of cured SAP makes contact with the core tube 42. Importantly, the seam 301 is at least 2 millimeters wide and contains SAP material in the overlap region so that even if the corrugations do not line up exactly and cause a small gap to form, any water entering the gap will be absorbed by the SAP, which will swell and close the gap. A rip cord 44, illustratively made from aramid fibers, is positioned beneath the armor tape 300 to facilitate entry into the cable 40 for splicing purposes.

Heretofore, hot-melt materials have been applied to seam 301 during cable construction in order to block water incursion. But, as discussed above, such hot-melt materials have not only caused a build up of excess material in the downstream die-forming equipment, but also weakened the jacket 41 at locations where the thickness of the hot-melt material is too great. And in situations where perfect alignment of the corrugations has been relied upon to block water incursion without hot-melt materials, expensive roll-forming equipment has been necessary to assure perfect alignment.

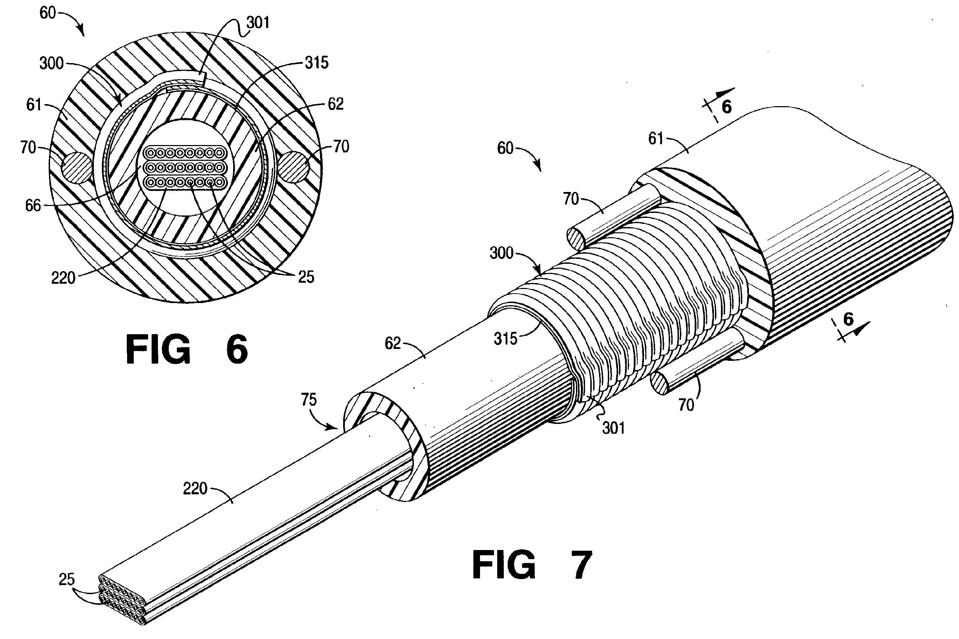

Another embodiment of the present invention is shown in FIG. 6 and 7, which illustrates a dry-blocked armor cable 60 having a pair of diametrically opposed strength members 70-70 that are disposed outside the core 75 and are embedded in the outer plastic jacket 61. In particular, the cable core 75 includes a central core tube 62 that contains a plurality of fiber ribbons 220, each containing a parallel coplanar array of color-coded optical fibers 25. A fiber ribbon, which is suitable for use in the present invention is disclosed in U. S. Patent 4,900,126. The region 66 surrounding the ribbons 220 is dry, which is to say the it contains no grease-like filling materials. Corrugated steel armor 300 surrounds the central core tube 62. In accordance with the invention, the inside surface of the armor 300 is coated with a liquid SAP 315 that has been at least partially cured during manufacture; and the SAP coating makes contact with the core tube 62. Seam 301 is at least 2 millimeters wide and contains SAP material in the overlap region so that even if the corrugations do not line up exactly and cause a small gap to form, any water entering the gap will be absorbed by the SAP, which will swell and close the gap.

Although various particular embodiments of the present invention have been shown and described, modifications are possible. These modifications include, but are not limited to: the use of an armor tape that is flat rather than corrugated; the use of a dielectric tape that include SAP materials in addition to an armor tape according to the invention; and the use of copper wires rather than optical fibers as the transmission medium.

## Claims

1. A communications cable [40, 60] comprising:
a core [55, 75] that extends along a longitudinal axis of the cable and comprises at least one transmission medium [25];
an armor tape [300] having an inside surface and an outside surface;
an outer jacket [41] comprising plastic material that has been extruded onto the outside surface of the armor tape,
**CHARACTERIZED IN THAT**
the inside surface of the armor tape includes a layer of liquid polymeric material [315] deposited thereon that has been at least partially cured prior to being wrapped around the core, the wrapped armor tape having a seam [301] wherein a portion of its inside surface overlaps its outside surface, said hardened polymeric material being swellable upon contact with water to block entry of water into the core.

2. The cable [40, 60] of claim 1 wherein the core [55, 75] is dry.

3. The cable [40, 60] of claim 1 wherein the transmission medium [25] comprises an optical fiber.

4. The cable [40, 60] of claim 1 wherein the core [55, 75] comprises multiple bundles of color-coded optical fibers [25], each bundle being surrounded by a structure that organizes the optical fibers into a unit.

5. The cable [40, 60] of claim 4 wherein the structure comprises a color-coded plastic sheath.

6. The cable [40] of claim 4 wherein the structure comprises a generally cylindrical plastic tube [210].

7. The cable [60] of claim 4 wherein the structure comprises a bonding material that organizes the optical fibers [25] into a parallel coplanar array [220].

8. The cable [40, 60] of claim 1 wherein the seam [301] is substantially parallel to the longitudinal axis of the cable.

9. The cable [40] of claim 1 wherein the core [55] further includes a strength member [45] that is disposed along the central axis of the cable.

10. The cable [60] of claim 1 further including a pair of diametrically opposed strength members [70] that are disposed outside the core [75] and are embedded in the outer plastic jacket [61].

11. A method for manufacturing a communications cable [40] including the following steps:
applying a coating of polymeric material [315], in its liquid state, to one side of a metallic tape [300]; and
moving the coated metallic tape along a path of travel in order to cause the polymeric material to become crosslinked, said crosslinked polymer being capable of absorbing large quantities of water or aqueous solution while retaining the liquid under pressure being capable of absorbing water.

12. The method of claim 11 wherein crosslinking is hastened in a curing station [340] that subjects the coated metallic tape [300] to a source of heat.

13. The method of claim 11 wherein crosslinking is hastened in a curing station [340] that subjects the coated metallic tape [300] to a source of ultraviolet light.

14. The method of claim 11 wherein the metallic tape [300] comprises corrugated steel.

15. The method of claim 11 further including the following steps:
forming the metallic tape [300] around a plurality of transmission media [25] to form an armored core, wherein the tape is formed with an overlapping seam [301] and the transmission media are adjacent to the polymer-coated side of the tape; and
extruding a plastic material onto the armored core to form a cable [40].

16. The method of claim 15 wherein the seam [301] is parallel to the longitudinal axis of the cable [40].
